# EUROPEAN PATENT APPLICATION

(11) **EP 4 568 048 A1**
(43) Date of publication of application: **11.06.2025**
(21) Application number: 24212247.1
(22) Date of filing: 12.11.2024
(51) Int. Cl.: H02J 3/16, H02J 3/18, H02J 3/32, H02M 1/00

(54) **GRID FIRMING INVERTER FOR FAST VOLTAGE SUPPORT IN MICROGRID**

(30) Priority: 07.12.2023 US 202318532388
(71) Applicant: Caterpillar, Inc., Peoria, IL 61629-6450 (US)
(72) Inventor: SPECKHART, Gregory J., Peoria, 61614 (US); YU, Dachuan, Dunlap, 61525 (US); GERDES, Jesse R., Dunlap, 61525 (US); HAN, Seok-hee, Dunlap, 61525 (US); WAI, Jackson, Dunlap, 61525 (US)
(74) Representative: Boult Wade Tennant LLP

(57) **Abstract**

A system (100) for managing power transfer with a power grid can include a DC-to-alternate current (AC) inverter (108), an output filter, and a load controller (112). The DC-to-alternate current (AC) inverter (108) can be configured to output an output voltage (VOUT). The output filter can be configured to receive an output voltage (VOUT) and generate a capacitor voltage vector (VCAP) across a capacitor, the capacitor voltage vector (VCAP) including a second axis component capacitor voltage and a first axis component capacitor voltage. The load controller (112) can be operable to regulate an active power supplied to the power grid by controlling the second axis component capacitor voltage and a reactive power supplied to the power grid by controlling the first axis component capacitor voltage, the load controller (112) regulates the active power by altering a phase angle and a magnitude of the second axis component capacitor voltage of the capacitor voltage vector (VCAP).

## Description

### Technical Field

This disclosure relates to electrical power equipment, and more particularly, to an energy storage system inverter apparatus.

### Background

Using various operating modes, a control unit of an active front end unit can service a grid, e.g., electrical grid or microgrid, which is equipped with gas or diesel gensets. The operating modes include a current control operating mode, a voltage control operating mode, and a frequency control operating mode. Transitioning between different operating modes can be needed to meet changing requirements of a system connected to an electrical grid, for example, gensets can be on or off.

Indian Patent No. 446,424 to Inventors Meshram Pranjali and Gawande Snehal discusses "a power electronics controller to imitate synchronous generator. It has three inverter legs which uses Pulse width Modulation (PWM) and LC filter for elimination of ripples or smoothening the output waveforms created by switching. The Filter Capacitor Cfwith damping resistance Rd are arranged in star manner, and coupled in shunt with the system. Vs and is are the generated voltage and current of VSI. Filter inductor Lftends to reduce the fluctuations in the VSI output current with resistance Rf which is the IGBT on-state resistance and the internal resistance of the filter inductor. This represents the impedance of the generator stator winding. The grid impedance should be noted for the inductors Lg (with series resistance Rg) in grid interconnection. The converter is connected to grid which is realized with the help of infinite bus." (See. Abstract).

### Summary of the Invention

In examples, a system for managing power transfer with a power grid, the system including a direct current (DC) link, an energy storage system (ESS) that stores DC power, and a load manager coupled between the DC link and the power grid, the load manager including a following operating mode, a forming operating mode, and a firming operating mode, in support of the firming operating mode the system includes: a DC-to-alternate current (AC) inverter configured to output an output voltage (VOUT); an output filter including a first inductor, a second inductor, and a capacitor electrically coupled between the first inductor and the second inductor, the output filter configured to: receive an output voltage (VOUT); and generate a capacitor voltage vector (VCAP) across the capacitor, the capacitor voltage vector (VCAP) including a second axis component capacitor voltage and a first axis component capacitor voltage; and a load controller operable to regulate an active power supplied to the power grid by controlling the second axis component capacitor voltage and a reactive power supplied to the power grid by controlling the first axis component capacitor voltage, the load controller regulates the active power by altering a phase angle and a magnitude of the second axis component capacitor voltage of the capacitor voltage vector (VCAP).

In examples, a method for managing power transfer between an energy storage system (ESS) and a power grid with an energy transfer system, the energy transfer system including a direct current (DC) link and a load manager coupled between the DC link and the power grid, the load manager including a following operating mode, a forming operating mode, and a firming operating mode, in support of the firming operating mode the system includes an output filter including a first inductor, a second inductor, and a capacitor electrically coupled between the first inductor and the second inductor, the output filter configured to receive an output voltage vector (VOUT) and generate a capacitor voltage vector (VCAP) across the capacitor, the method including: receiving, with a load controller, a second axis component capacitor voltage and a first axis component capacitor voltage, each of the second axis component capacitor voltage and the first axis component capacitor voltage from the capacitor voltage vector (VCAP); controlling the second axis component capacitor voltage to regulate an active power provided from the energy transfer system to the power grid; and controlling the first axis component capacitor voltage to regulate a reactive power provided from the energy transfer system to the power grid.

### Brief Description of the Figures

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a simplified block diagram of an example of a system that can manage power transfer to an external component.
FIG. 2 is a simplified block diagram of an example of a system that can manage power transfer to an external component.
FIG. 3 is a simplified block diagram of an example of a grid-firming inverter control diagram.
FIG. 4 is a simplified block diagram of an example of a proportional-integral controller that can implement various techniques of this disclosure.
FIG. 5 is a flow diagram of an example of a method of controlling an electrical power output of an active front-end in following mode according to various techniques of the present disclosure.

### Detailed Description

An active front-end unit is a bidirectional power unit that can interface between a battery bank and an external component, such as a grid. Using various operating modes, a control unit of an active front-end unit can service a grid, such as an electrical grid or microgrid. The operating modes include a current control operating mode (following operating mode), a voltage control operating mode (firming operating mode), and a frequency control operating mode (forming operating mode).

The present inventors have recognized a need for a system for voltage control operating in the firming operating mode. The firming operating mode offers a faster response to the power demands of the grid such that the system can respond to and provide reactive power to the grid upon increased power loads and surges on the microgrid.

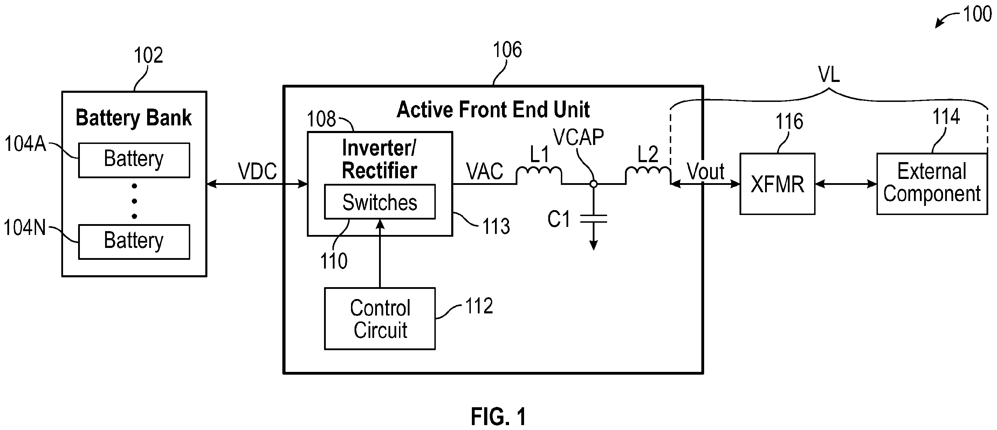

FIG. 1 is a simplified block diagram of an example of a system that can manage power transfer to an external component. The system 100 can include a battery bank 102 having a plurality of batteries 104A-104N, such as coupled in series with one another. The battery bank 102 can provide a DC voltage VDC to an active front end unit 106, which can be a bidirectional power unit.

The active front end unit 106 can include an inverter/rectifier circuit 108 that can receive the DC voltage VDC and, using a plurality of switches 110 controlled by a control unit 112, the inverter can generate and output an AC voltage VAC via output 113. The output 113 of the inverter can be coupled to a capacitor C1 that can be coupled to an electrical grid. The AC voltage VAC can be applied to a filter circuit, such as including inductors L1, L2 and the capacitor C1. The AC voltage VAC can be smoothed by the inductors L1 and L2 and capacitor C1 can generate a smooth sinusoidal waveform. The control unit 112 can include one or more processors, controllers, field programable gate arrays (FPGA), or a combination thereof.

The active front end unit 106 can generate an output voltage VOUT that can be applied to an external component 114 via an optional transformer 116. The VOUT can be managed by the active front end unit 106 to match the load voltage VL of the components connected to the active front end unit 106, such as, for example, the external component 114 or the optional transformer 116. The external component 114 includes a grid (e.g., an electrical grid or a microgrid). The external component 114 can include a motor or a generator. Supplying a DC voltage to the inverter/rectifier circuit 108 discharges the batteries 104A-104N in the battery bank 102.

In examples, such as when the external component 114 is a grid, the active front end unit 106 can receive the AC voltage VAC. The inverter/rectifier circuit 108 can rectify the AC voltage VAC and generate a DC voltage VDC that can charge the batteries 104A-104N in the battery bank 102.

Using various operating modes, the control unit 112 of the active front end unit 106 can service the external component 114. In a following operating mode, the active front end unit 106 can sink or source current. In the following operating mode, the voltage is not controlled by the active front end unit but by the external component. The following operating mode directly controls real and reactive power by controlling different portions of the current vector.

In a firming operating mode, the active front end unit 106 can act as a voltage source and control the voltage at an internal node of the system, such as the voltage of the capacitor C1. The firming operating mode can directly control real and reactive power by controlling different portions of the voltage vector.

The following operating mode or firming operating mode techniques use a part of the current or voltage vector, respectively, and controlling a magnitude of that portion of the vector directly provides the power requested.

This disclosure describes, among other things, techniques to control an electrical power output of an active front end unit operating in the grid firming mode, where the active front end unit has an inverter, where an output of the active front end unit is coupled to a capacitor that is coupled to an electrical grid.

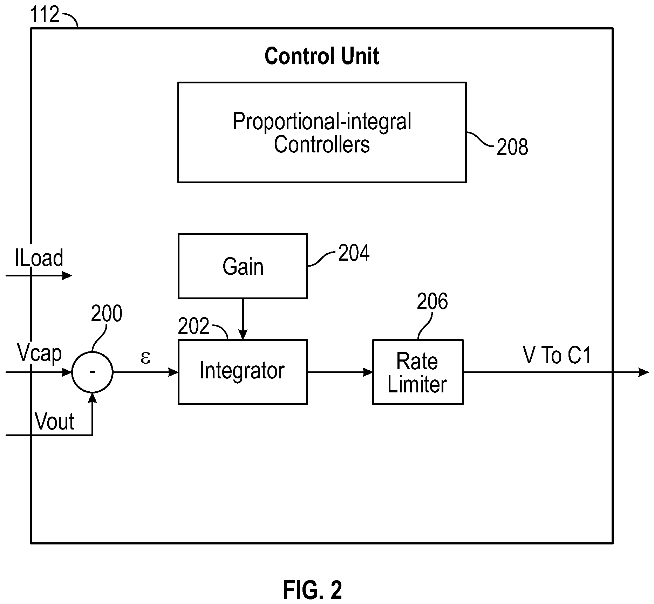

FIG. 2 is a simplified block of an example of a control unit of an active front end unit that can implement various techniques of this disclosure.

The control unit 112 is configured to receive various inputs. For example, the control unit 112 receives representations, e.g., scaled versions, of several measured values, including the measured capacitor voltage vector VCAP (including its angle), the measured grid voltage vector VOUT (including its angle), and the measured load current I_{LOAD}, which can be measured using various techniques, such as using voltage or current transformers.

The output of the difference circuit 200, which is representative of the error ε, can be applied to an integrator circuit 202. The integrator circuit 202 receives and integrates the error ε to generate a voltage command to be applied to the capacitor C1 (FIG. 1). In particular, the integrator circuit 202 can generate a voltage command representing the D component V_{D} of the capacitor voltage vector VCAP to be applied to the capacitor C1 (FIG. 1). Similarly, the integrator circuit 202 can generate a voltage command representing the Q component V_{Q} of the capacitor voltage vector VCAP to be applied to the capacitor C1 (FIG. 1).

In examples, the control unit 112 can include a gain circuit 204 coupled to the integrator circuit 202 and configured to apply a gain factor to adjust a rate of the integration of the integrator circuit 202. The rate limiter circuit 206 can gradually reduce the voltage command representing the D component V_{D} (or the Q component V_{Q}) of the capacitor voltage vector VCAP by rate limiting.

In the firming operating mode, the grid voltage vector VOUT can be aligned with or tied to the Q axis. The control unit control unit 112 can control the capacitor voltage vector VCAP by controlling the D and Q components of VCAP, V_{D} and V_{Q}. By controlling V_{D}, the control unit 112 can rotate VCAP to the right or left of VOUT, and by controlling V_{Q}, the control unit 112 can adjust VCAP to be greater or smaller than VOUT in terms of magnitude.

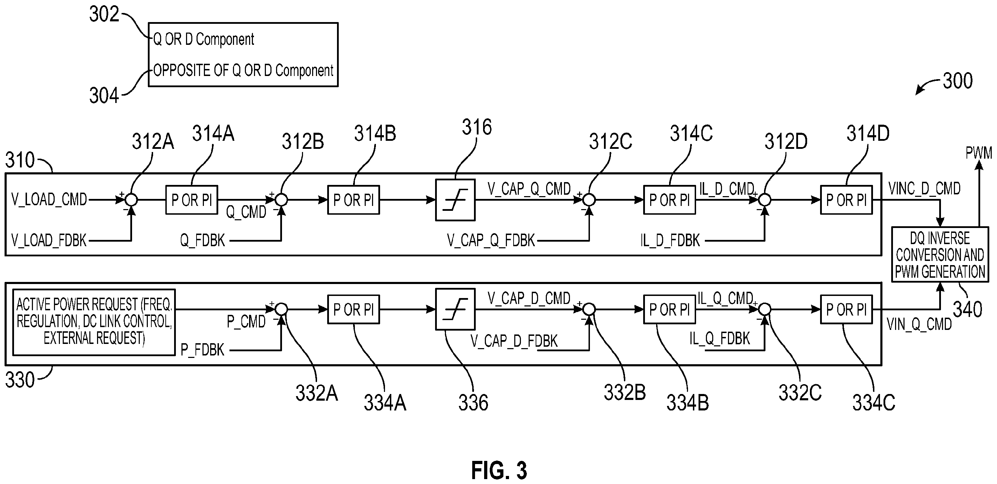

FIG. 3 is a simplified block diagram of an example of a grid-firming inverter control 300 (e.g., the control unit 112 (FIG. 1)). The grid-firming inverter control 300 can be configured to control a first component 302 and a second component 304 of a voltage (e.g., the D and Q components of VCAP referred to herein as V_{D} and V_{Q}, respectively) to provide power (e.g., active power and reactive power) provided to the grid (e.g., external component 114 (FIG. 1)). In examples, the first control loop 310 can be configured to control the first component 302 to manage the reactive power supplied to the grid and the second control loop 330 can be configured to control the second component 304 to manage the reactive power supplied to the grid.

To control the reactive power, the first control loop 310 can include one or more output difference circuits or summation nodes (summation node 312), one or more controllers (controller 314), and a voltage limiter 316 (e.g., the rate limiter circuit 206 (FIG. 2)).

In examples, a first summation node 312A can be configured to combine voltages from two different sources and generate, output, or transmit an error ε to the controller 314. For example, to control the reactive power within the first control loop 310, a first summation node 312A can receive the utility voltage output V_load_cmd and the V_load_Fdbk. The V_load_cmd can be the voltage currently output by the grid-firming inverter control 300 and the V_load_Fdbk can be the voltage required by the grid or other component. In examples, the error ε generated by the first summation node 312A can be indicative of the Utility voltage, V_UTIL, and can be transmitted to the first controller 314A.

The first controller 314A can receive the V_UTIL and integrate (e.g., alter a phase or magnitude) the V_UTIL to generate the power command (e.g., Q_CMD or D_CMD, depending on whether the first component 302 is D or Q components of VCAP, V_{D} or V_{Q}).

A second summation node 312B can receive the power command (e.g., Q_CMD or D_CMD) and power feedback (e.g., Q_Fdbk or D_Fdbk). The power feedback can be measured at any point between the grid-firming inverter control 300 and the external component connected to the grid-firming inverter control 300. The second summation node 312B can transmit a second error ε, which can be used by the second controller 314B to integrate the power command and output a capacitor voltage command (e.g., V_Cap_Q_Cmd or V_Cap_D_Cmd). As shown in FIG. 3, there can be a voltage limiter 316, which can receive the capacitor voltage command and limit the signal by adjusting a gain to prevent damage to components of the system.

A third summation node 312C can receive the capacitor voltage command and capacitor voltage feedback (e.g., V_Cap_Q_Fdbk or V_Cap_D_Fdbk) and can generate an error ε based on a difference between the capacitor voltage command and the capacitor voltage feedback. In examples, the capacitor voltage feedback can be measured at the capacitor C1 (FIG. 2). A third controller 314C can receive the error ε from the third summation node 312C and integrate the capacitor voltage command to generate an inverter command (e.g., IL_D_Cmd or IL_Q_Cmd).

A fourth summation node 312D can receive the inverter command (e.g., IL_D_Cmd or IL_Q_Cmd) and an inverter feedback command (e.g., IL_D_Fdbk or IL_Q_Fdbk) and can generate an error ε based on a difference between the inverter command and the inverter feedback command. In examples, the inverter command can be measured within the inverter, such as, for example, as shown as ILOAD (FIG. 2). A fourth controller 314D can receive the error ε and integrate the inverter command to generate an inverter command (e.g., Inv_D_Cmd or Inv_Q_Cmd).

To control the active power, the second control loop 330 can include one or more summation nodes or output difference circuits (e.g., the difference circuit 200) (summation node 332), one or more controllers (controller 334), and a voltage limiter 336 (e.g., the rate limiter circuit 206 (FIG. 2)).

In contrast to the first summation node 312A receiving the receiving the utility load voltage, the first summation node 332A can receive an active power request 333 from a frequency regulator, DC Link controller, or any other component configured to make a power request as a power command P_Cmd. The first summation node 332A can also receive power feedback P_Fdbk from the power supplied from the grid-firming inverter control 300 to the grid or other component connected to the grid-firming inverter control 300 and generate an error ε based on a difference between the P_Cmd and the P_Fdbk.

A first controller 334A can receive the error ε and integrate the power signal to generate a capacitor voltage for the opposite component (e.g., the first component 302 or the second component 304) from the first control loop 310 (e.g., V_Cap_D_Cmd or V_Cap_Q_Cmd). The voltage limiter 336 can limit the signal to a pre-determined limit to prevent damage to any components of the second control loop 330 or any other component connected to the grid-firming inverter control 300.

A second summation node 332A of the second control loop 330 can receive the capacitor voltage command (e.g., the V_Cap_D_Cmd or the V_Cap_Q_Cmd) and voltage capacitor feedback from capacitor C1 (e.g., V_Cap_D_Fdbk or V_Cap_Q_Fdbk) and generate an error ε based on a difference between the voltage capacitor command and the capacitor voltage feedback. A second controller 334B can receive the error ε and integrate (e.g., to change a phase or a magnitude) the capacitor voltage command to generate an inductor voltage command (e.g., IL_Q_Cmd or IL_D_Cmd).

A third summation node 332C can be configured to receive the inductor voltage command and inductor voltage feedback (e.g., IL_Q_Fdbk or IL_D_Fdbk) and generate error ε based on a difference between the inductor voltage command and the inductor voltage feedback. The third controller 334D can be configured to receive the error ε and integrate (e.g., alter a magnitude or phase) the inductor voltage command to generate an inverter command signal (e.g., Vinv_Q_Cmd or Vinv_D_Cmd).

The grid-firming inverter control 300 can include a capacitance voltage regulator 340, or some other component configured to receive the inductor voltages from the first control loop 310 and the second control loop 330 (e.g., the Vinv_D_Cmd and the Vinv_Q_Cmd) and generate a pulse width modulating signal and the final output voltage of the grid-firming inverter control 300 (shown as PWM).

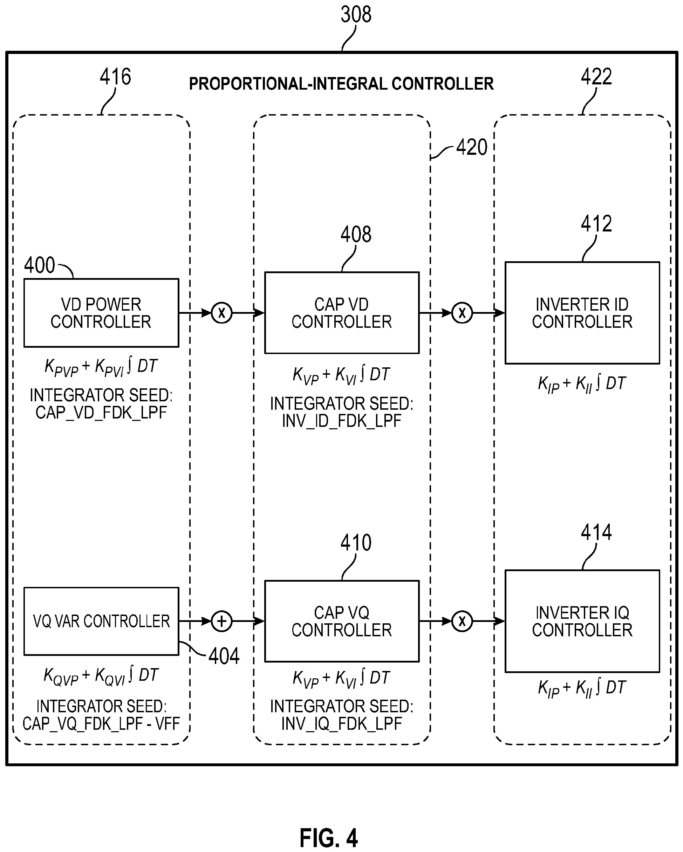

FIG. 4 is a simplified block of an example of the proportional-integral (PI) controllers 408 of FIG. 4 that can implement various techniques of this disclosure. Various PI controllers (400 and 406) are depicted in box 416. The PI controllers (400 and 404) in box 416 represent controllers that output commands. The PI controllers 408 and 410 in box 420 represent capacitor voltage regulators for controlling the D component V_{D} and the Q component V_{Q}, respectively, of the capacitor voltage vector VCAP applied to the capacitor C1 of FIG. 1. The PI controllers 412 and 414 of box 422 represent current regulators for controlling the D component I_{D} and the Q component I_{Q}, respectively.

Referring to box 416, in the firming operating mode, the D component V_{D} is generated using the controller 400. Depending on whether the control unit is in the forming operating mode or the firming operating mode, the output of block 418 or controller 400 is applied to the capacitor V_{D} voltage controller 408.

In the firming operating mode, the control unit uses the capacitor V_{D} voltage controller 408 to create a current regulator command to command the inverter I_{D} controller 412. In the firming operating mode, the control unit directly controls real power using the D component V_{D}. The output of the Q component V_{Q} VAR controller 404 is applied along with a voltage VFF to the capacitor V_{Q} voltage controller 410, where the voltage VFF can be a nominal grid voltage. The control unit uses the capacitor V_{Q} voltage controller 404 to create a current regulator command to command the inverter I_{Q} controller 414.

PI controllers can be modelled using a proportional (P) gain term K_{P} summed with an integral (I) gain term K_{I}∫ *dt.* The proportional gain term K_{P} is proportional to the current value of the difference (or error) between a setpoint value and a feedback or measured value. The integral gain term K_{I}∫ *dt* integrates the past values of the difference (or error) between a setpoint value and a feedback or measured value over time.

The capacitor V_{D} power controller 400 has two inputs: Input1 = Real Power Command and Input2 = Real Power Feedback (Measured). The error is represented by Err = Input1 - Input2 = Command - Measured. The output of the capacitor V_{D} power controller 400 is represented as Output = -(KPVP*ERR + KPVI* ∫ *ERR dt*), where KPVP and KPVI are proportional and integral gain constants, respectively, and where the Output is the capacitor V_{D} command. In accordance with this disclosure, the integrator can be seeded with a capacitor V_{D} voltage feedback value (measured) to prevent various discontinuities in at least one of: the output voltage, the output current, or the electrical power output of the active front end unit. In examples, it can be desirable to filter the measured value before applying the seed value the integrator, such as using low pass filter.

The capacitor V_{Q} VAR controller 404 has two inputs: Input1 = Reactive Power Command and Input2 = Reactive Power Feedback (Measured). The error is represented by Err = Input1 - Input2 = Command - Measured. The output of the capacitor V_{Q} VAR controller 404 is represented as Output = (KQVP*ERR + KQVI* ∫ *ERR dt*), where KQVP and KQVI are proportional and integral gain constants, respectively, and where the Output plus the voltage VFF is the capacitor V_{Q} command. In accordance with this disclosure, the integrator can be seeded with a capacitor V_{Q} voltage feedback value (measured) to prevent various discontinuities in at least one of the output voltage, the output current, or the electrical power output of the active front end unit. In examples, it can be desirable to filter the measured value before applying the seed value the integrator, such as using low pass filter.

The capacitor V_{D} controller 408 has two inputs: Input1 = Capacitor V_{D} Command and Input2 = Capacitor V_{D} Command Feedback (Measured). The error is represented by Err = Input1 - Input2 = Command - Measured. The output of the capacitor V_{D} controller 408 is represented as Output = (KVP*ERR + KVI* ∫ *ERR dt*), where KVP and KVI are proportional and integral gain constants, respectively, and where the Output is the inverter I_{D} command. In accordance with this disclosure, the integrator can be seeded with an inverter I_{D} current feedback value (measured) to prevent various discontinuities in at least one of the output voltage, the output current, or the electrical power output of the active front end unit. In examples, it can be desirable to filter the measured value before applying the seed value the integrator, such as using low pass filter.

The capacitor V_{Q} controller 410 has two inputs: Input1 = Capacitor V_{Q} Command and Input2 = Capacitor V_{Q} Command Feedback (Measured). The error is represented by Err = Input1 - Input2 = Command - Measured. The output of the capacitor V_{Q} controller 410 is represented as Output = (KVP*ERR + KVI* f *ERR dt*), where KVP and KVI are proportional and integral gain constants, respectively, and where the Output is the inverter I_{Q} command. In accordance with this disclosure, the integrator can be seeded with an inverter I_{Q} current feedback value (measured) to prevent various discontinuities in at least one of the output voltage, the output current, or the electrical power output of the active front end unit. In examples, it can be desirable to filter the measured value before applying the seed value the integrator, such as using low pass filter.

### Industrial Applicability

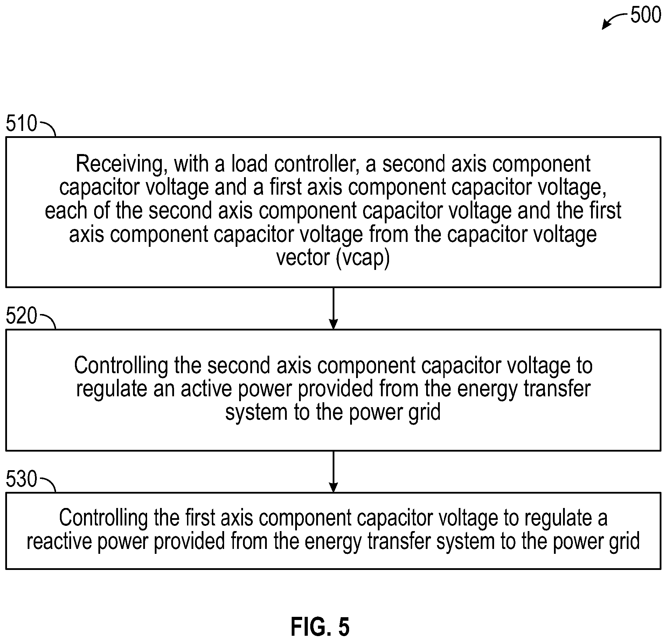

FIG. 5 is a flowchart of an example method 500. The method 500 can be a method for managing power transfer between an energy storage system (ESS) and a power grid with an energy transfer system. In examples, the energy transfer system can include a direct current (DC) link and a load manager coupled between the DC link and the power grid. The load manager can include a following operating mode, a forming operating mode, and a firming operating mode, in support of the firming operating mode the system can include an output filter including a first inductor, a second inductor, and a capacitor electrically coupled between the first inductor and the second inductor. The output filter can be configured to receive an output voltage vector (VOUT) and generate a capacitor voltage vector (VCAP) across the capacitor. The method can include operations 510-530.

At operation 510, the method 500 can include receiving, with a load controller, a second axis component capacitor voltage and a first axis component capacitor voltage, each of the second axis component capacitor voltage and the first axis component capacitor voltage from the capacitor voltage vector (VCAP).

At operation 520, the method 500 can include controlling the second axis component capacitor voltage to regulate an active power provided from the energy transfer system to the power grid. In examples, controlling the second axis component capacitor voltage can include altering, with the load controller, a phase angle of the output voltage vector (VOUT).

To regulate the second axis component, the load controller can include a second axis component capacitor voltage summation node, a second axis component capacitor voltage regulator, and a second axis component capacitor voltage limiter. The method 500 can also include controlling the second axis component capacitor voltage, using the second axis component capacitor voltage regulator, based at least in part on the second axis component capacitor voltage summation node; and limiting the second axis component capacitor voltage to a pre-determined level using the second axis component capacitor voltage limiter.

In examples, the second axis component capacitor voltage summation node can include a real power reference value and a real power measured voltage measured at a connection point to the power grid. The method 500 can also include generating a summation voltage using the real power reference value and the real power measured voltage; and controlling the second axis component capacitor voltage, using the second axis component capacitor voltage regulator, based on the summation voltage.

At operation 530, the method 500 can include controlling the first axis component capacitor voltage to regulate a reactive power provided from the energy transfer system to the power grid. In examples, to regulate the first axis component capacitor voltage, the load controller includes a first axis component capacitor voltage summation node, a first axis component capacitor voltage regulator, and a first axis component capacitor voltage limiter. The method 500 can include controlling the first axis component capacitor voltage, using the first axis component capacitor voltage regulator, based at least in part on the first axis component capacitor voltage summation node; and limiting the first axis component capacitor voltage to a pre-determined level using the first axis component capacitor voltage limiter.

In examples, the first axis component capacitor voltage summation node can include a reactive power reference value and a reactive power measured voltage measured at a connection point to the power grid. The method 500 can include generating a summation voltage by using the real power reference value and the reactive power measured voltage; and controlling the first axis component capacitor voltage, using the first axis component capacitor voltage regulator, based on the summation voltage.

The above detailed description is intended to be illustrative, and not restrictive. The scope of the disclosure should, therefore, be determined with references to the appended claims, along with the full scope of equivalents to which such claims are entitled.

## Claims

1. A system (100) for managing power transfer with a power grid, the system (100) including a direct current (DC) link, an energy storage system (ESS) (102) that stores DC power, and a load manager coupled between the DC link and the power grid, the load manager (106) including a following operating mode, a forming operating mode, and a firming operating mode, in support of the firming operating mode the system (100) comprises:
a DC-to-alternate current (AC) inverter (108) configured to output an output voltage (VOUT) (113);
an output filter including a first inductor (L1), a second inductor (L2), and a capacitor (C1) electrically coupled between the first inductor and the second inductor, the output filter configured to:
receive an output voltage (VOUT); and
generate a capacitor voltage vector (VCAP) across the capacitor, the capacitor voltage vector (VCAP) including a second axis component capacitor voltage and a first axis component capacitor voltage; and
a load controller (112) (314) (334) operable to regulate an active power supplied to the power grid by controlling the second axis component capacitor voltage and a reactive power supplied to the power grid by controlling the first axis component capacitor voltage, the load controller (112) (314) (334) regulates the active power by altering a phase angle and a magnitude of the second axis component capacitor voltage of the capacitor voltage vector (VCAP).

2. The system (100) of claim 1, wherein the first axis component capacitor voltage is aligned with the capacitor output voltage vector, and wherein the second axis component is orthogonal to the first axis component capacitor voltage.

3. The system (100) of claim 2, wherein to regulate the second axis component capacitor voltage, the load controller (112) (314) (334) comprises:
a second axis component capacitor voltage summation node (332) (312);
a second axis component capacitor voltage regulator operable to control the second axis component capacitor voltage based at least in part on the second axis component capacitor voltage summation node (332) (312); and
a second axis component capacitor voltage limiter (336) (316) operable to limit the second axis component capacitor voltage to a pre-determined level.

4. The system (100) of claim 3, wherein the second axis component capacitor voltage summation node (332) (312) comprises:
a real power reference value; and
a real power measured voltage measured at a connection point to the power grid.

5. The system (100) of claim 4, wherein to further regulate the first axis component capacitor voltage, the load controller (112) (314) (334) comprises:
a second axis component inductor voltage summation node (332) (312) including:
a reactive inductor reference value; and
a reactive inductor measured voltage measured at a connection point to the power grid;
a second axis component inductor voltage regulator operable to control a second axis component inductor voltage based at least in part on the second axis component inductor voltage summation node (332) (312); and
a second axis component inductor voltage limiter (336) (316) operable to limit the second axis component inductor voltage to a pre-determined level.

6. The system (100) of claim 3, comprising:
a capacitor voltage regulator coupled between the second axis component capacitor voltage limiter (336) (316) and the power grid operable to provide pulse-width modulation to the power grid.

7. The system (100) of claim 1, wherein regulating the reactive power by controlling the first axis component capacitor voltage determines a load nominal voltage through a grid tie inductor of the power grid.

8. The system (100) of claim 7, wherein to regulate the first axis component capacitor voltage, the load controller (112) (314) (334) comprises:
a first axis component capacitor voltage summation node (332) (312);
a first axis component capacitor voltage regulator operable to control the first axis component capacitor voltage based at least in part on the first axis component capacitor voltage summation node (332) (312); and
a first axis component capacitor voltage limiter (336) (316) operable to limit the first axis component capacitor voltage to a pre-determined level.

9. The system (100) of claim 8, wherein the first axis component capacitor voltage summation node (332) (312) comprises:
a reactive power reference value; and
a reactive power measured voltage measured at a connection point to the power grid.

10. The system (100) of claim 9, wherein to further regulate the first axis component capacitor voltage, the load controller (112) (314) (334) comprises:
a first axis component inductor voltage summation node (332) (312);
a first axis component inductor voltage regulator operable to control a first axis component inductor voltage based at least in part on the first axis component inductor voltage summation node (332) (312); and
a first axis component inductor voltage limiter (336) (316) operable to limit the first axis component inductor voltage to a pre-determined level.

11. The system (100) of claim 10, wherein the first axis component inductor voltage summation node (332) (312) comprises:
a reactive inductor reference value; and
a reactive inductor measured voltage measured at a connection point to the power grid.

12. The system (100) of claim 1, wherein the load manager comprises:
an AC output transformer (116) coupled between the output filter (106) and the power grid (114).

13. A method (500) for managing power transfer between an energy storage system (100) (ESS) and a power grid with an energy transfer system (106), the energy transfer system (106) including a direct current (DC) link and a load manager coupled between the DC link and the power grid (114), the load manager including a following operating mode, a forming operating mode, and a firming operating mode, in support of the firming operating mode the system (100) includes an output filter including a first inductor, a second inductor, and a capacitor electrically coupled between the first inductor and the second inductor, the output filter configured to receive an output voltage vector (VOUT) and generate a capacitor voltage vector (VCAP) across the capacitor, the method (500) comprising:
receiving, with a load controller (112) (314) (334), a second axis component capacitor voltage and a first axis component capacitor voltage, each of the second axis component capacitor voltage and the first axis component capacitor voltage from the capacitor voltage vector (VCAP);
controlling the second axis component capacitor voltage to regulate an active power provided from the energy transfer system (100) to the power grid; and
controlling the first axis component capacitor voltage to regulate a reactive power provided from the energy transfer system (100) to the power grid.

14. The method (500) of claim 13, wherein controlling the second axis component capacitor voltage to regulate an active power provided from the energy transfer system (100) to the power grid comprises:
altering, with the load controller (112) (314) (334), a phase angle of the output (113) voltage vector (VOUT).

15. The method (500) of claim 14, wherein to regulate the second axis component capacitor voltage, the load controller (112) (314) (334) includes a second axis component capacitor voltage summation node (332) (312), a second axis component capacitor voltage regulator, and a second axis component capacitor voltage limiter (336) (316), and wherein the method (500) comprises:
controlling the second axis component capacitor voltage, using the second axis component capacitor voltage regulator, based at least in part on the second axis component capacitor voltage summation node (332) (312); and
limiting the second axis component capacitor voltage to a pre-determined level using the second axis component capacitor voltage limiter (336) (316).
